# EUROPÄISCHE PATENTANMELDUNG

(11) **EP 3 100 820 A2**
(43) Veröffentlichungstag der Anmeldung: **07.12.2016**
(21) Anmeldenummer: 16172762.3
(22) Anmeldetag: 02.06.2016
(51) Int. Cl.: B23Q 7/04

(54) **SPANABHEBENDE BEARBEITUNGSMASCHINE**

(30) Priorität: 02.06.2015 DE 102015108701
(71) Anmelder: Grob-Werke GmbH & Co. KG, 87719 Mindelheim (DE)
(72) Erfinder: Grob, Burkhart, verstorben (DE)
(74) Vertreter: Pfister & Pfister Patent- und Rechtsanwälte

(57) **Zusammenfassung**

Die Erfindung betrifft eine spanabhebende Bearbeitungsmaschine, mit einer Motorspindel, welche auch zum Bewegen eines Werkstücks zwischen einem Rüstplatz und einem Werkstücktisch dient. Die Erfindung betrifft des Weiteren ein zugehöriges Verfahren sowie ein zugehöriges System.

## Beschreibung

Die Erfindung betrifft eine spanabhebende Bearbeitungsmaschine. Diese weist mindestens eine je ein Werkzeug rotativ antreibende Motorspindel auf. Sie weist ferner einen Werkstücktisch auf, an oder auf welchem das mindestens eine Werkstück unmittelbar oder mittelbar über eine das Werkstück tragende Palette während der spanabhebenden Bearbeitung aufgespannt ist. Für den Transport des Werkstückes bzw. der das Werkstück tragenden Palette von einem Rüstplatz zum Werkstücktisch und zurück ist auf der Werkstücktischoberfläche eine Gleit- oder Rollenbahn vorgesehen, auf der das Werkstück bzw. die Palette für den Transport aufliegt, oder die Palette ist auf ihrer Unterseite mit Gleitschienen oder Laufrollen ausgestattet. Die Motorspindel ist zumindest entlang einer ersten Linearachse durch einen ersten Motorspindellinearantrieb beweglich positionierbar.

Die Erfindung betrifft des Weiteren ein Verfahren für das Einwechseln eines Werkstücks auf einen Werkstücktisch, welches insbesondere mittels einer eben beschriebenen Bearbeitungsmaschine durchgeführt werden kann.

Außerdem betrifft die Erfindung ein System mit einer spanabhebenden Bearbeitungsmaschine und einer Palette.

Bei bekannten spanabhebenden Bearbeitungsmaschinen wird ein zu bearbeitendes Werkstück typischerweise auf dem Rüstplatz auf die Bearbeitungsmaschine bzw. auf die Palette aufgelegt. Anschließend wird das Werkstück entweder von Hand so verschoben, dass es in den Wirkungsbereich des in der Motorspindel gehaltenen Werkzeugs kommt, oder es wird hierfür ein speziell vorgesehener elektrischer oder hydraulischer Antrieb verwendet.

Es wurde jedoch erkannt, dass das Verschieben durch manuellen Eingriff zu einem erhöhten Aufwand und erhöhter Fehleranfälligkeit führt, und dass die Verwendung eines speziellen Antriebs für das Verbringen des Werkstücks bzw. der Palette zu einem hohen Aufwand führt.

Es ist deshalb eine Aufgabe der Erfindung, eine spanabhebende Bearbeitungsmaschine vorzusehen, welche im Vergleich zu bekannten Bearbeitungsmaschinen insbesondere hinsichtlich Handhabung und/oder Aufwand verbessert ist. Es ist des Weiteren eine Aufgabe der Erfindung, ein entsprechendes Verfahren für das Einwechseln eines Werkstücks vorzusehen, welches mit einer solchen Bearbeitungsmaschine verwendet werden kann. Außerdem ist es eine Aufgabe der Erfindung, ein System mit einer solchen Bearbeitungsmaschine und einer Palette bereitzustellen.

Dies wird erfindungsgemäß durch eine Bearbeitungsmaschine gemäß den unabhängigen Vorrichtungsansprüchen, durch ein Verfahren gemäß dem unabhängigen Verfahrensanspruch sowie durch ein System gemäß dem Systemanspruch erreicht. Vorteilhafte Ausgestaltungen können beispielsweise den jeweiligen Unteransprüchen entnommen werden.

Die Erfindung betrifft eine spanabhebende Bearbeitungsmaschine. Diese weist mindestens eine je ein Werkzeug rotativ antreibende Motorspindel auf. Sie weist ferner einen Werkstücktisch auf, an oder auf welchem das mindestens eine Werkstück unmittelbar oder mittelbar über eine das Werkstück tragende Palette während der spanabhebenden Bearbeitung aufgespannt ist. Für den Transport des Werkstückes bzw. der das Werkstück tragenden Palette von einem Rüstplatz zum Werkstücktisch und zurück ist auf der Werkstücktischoberfläche eine Gleit- oder Rollenbahn vorgesehen, auf der das Werkstück bzw. die Palette für den Transport aufliegt, oder die Palette ist auf ihrer Unterseite mit Gleitschienen oder Laufrollen ausgestattet. Die Motorspindel ist zumindest entlang einer ersten Linearachse durch einen ersten Motorspindellinearantrieb beweglich positionierbar.

Erfindungsgemäß ist vorgesehen, dass der Motorspindellinearantrieb auch für die Bewegung des Werkstückes vom Rüstplatz zum Werkstücktisch und zurück dient.

Damit kann sowohl auf eine manuelle Verschiebung wie auch auf das Vorsehen eines separaten Antriebs zum Verschieben des Werkstücks oder der Palette verzichtet werden. Im Vergleich zur manuellen Verschiebung werden somit Arbeitsgänge eingespart und Fehlerquellen vermieden. Im Vergleich zum Vorsehen eines separaten Antriebs wird apparativer Aufwand eingespart.

Eine Bearbeitungsmaschine dient typischerweise dem spanabhebenden Bearbeiten von Werkstücken wie beispielsweise Motorblöcken. Dabei können mittels des Werkzeugs beispielsweise Löcher gebohrt, Oberflächen strukturiert oder Kanten begradigt werden. Bei dem Werkzeug kann es sich dementsprechend beispielsweise um einen Bohrer oder um ein Schleifwerkzeug handeln.

Sofern eine Palette verwendet wird, ist diese typischerweise mit Geräten zum Halten und/oder Fixieren des Werkstücks ausgestattet. Damit kann das Werkstück fest mit der Palette verbunden werden.

Der Rüstplatz ist üblicherweise derjenige Teil der Bearbeitungsmaschine, welcher zum Beladen mit dem Werkstück und zum Entfernen des Werkstücks nach der Bearbeitung vorgesehen ist.

Eine Gleitbahn ist typischerweise eine Oberfläche, auf welcher das Werkstück oder die Palette, gegebenenfalls unter Zuhilfenahme von Gleitschienen oder ähnlichen Elementen, gleiten kann.

Eine Rollenbahn ist typsicherweise eine Oberfläche, auf welcher sich eine Mehrzahl oder auch Vielzahl von Rollen befindet, wobei im Regelfall jede Rolle einzeln drehbar ist. Im Vergleich zu einer Gleitbahn können damit insbesondere Reibung und Verschleiß verringert werden.

Entsprechend der Ausbildung einer Gleit- oder Rollenbahn auf der Werkstücktischoberfläche kann auch die Palette ausgestaltet sein, um eine problemlose Bewegung der Palette mit dem Werksrück zwischen dem Rüstplatz und dem Werkstücktisch zu erleichtern. Hierfür können beispielsweise Gleitschienen oder Laufrollen an der Unterseite der Palette vorhanden sein.

Der Motorspindellinearantrieb ist typischerweise dazu ausgebildet, die Motorspindel in einer oder mehreren, insbesondere drei, Raumrichtungen zu bewegen. Üblicherweise kann er die Motorspindel zumindest in einer Z-Richtung bewegen, worunter eine Richtung verstanden sei, welche parallel zur Werkstücktischoberfläche liegt und/oder horizontal liegt. Diese Fähigkeit kann im Rahmen der Erfindung insbesondere zum Bewegen des Werkstücks vom Rüstplatz zum Werkstücktisch und zurück dienen.

Ein Motorspindellinearantrieb kann dazu ausgebildet sein, die Motorspindel nur in einer Raumrichtung zu bewegen. In diesem Fall kann insbesondere für jede Raumrichtung ein eigener Motorspindellinearantrieb vorhanden sein. Der Motorspindellinearantrieb kann jedoch auch zur Bewegung in zwei oder drei Raumrichtungen ausgebildet sein.

Es sei verstanden, dass der Motorspindellinearantrieb typischerweise auch bei Bearbeitungsmaschinen gemäß dem Stand der Technik vorhanden ist und nunmehr im Rahmen der Erfindung eine zusätzliche Funktion, ohne dabei an Effizienz zu verlieren, bekommt. Der Werkstückwechsel erfolgt typischerweise in Zeiten, wo keine Bearbeitung des Werkstückes erfolgt und daher die Motorspindel nicht im Einsatz ist. Gerade in diesen Wechselpausen wird gemäß dem erfindungsgemäßen Vorschlag jetzt die Motorspindel zusätzlich genutzt.

Die sowieso vorhandenen Antriebe sind dafür geeignet und ausgelegt um das Werkstück zu transportieren, d.h. dieser zusätzliche Bearbeitungskomfort verursacht keine zusätzlichen Kosten.

Es sei verstanden, dass die Spindel oder ein in der Spindel gehaltenes Kopplungsstück sowohl an der Palette angreifen kann wie auch direkt an dem Werkstück, zum Beispiel einem Motorblock, angreifen kann. Letzteres wird insbesondere in dem Fall in Betracht kommen, wenn keine Palette verwendet wird. Jedoch auch bei Verwendung einer Palette kann die Spindel oder das Kopplungsstück wahlweise an der Palette oder an dem Werkstück angreifen, wobei im letzteren Fall die Palette mitbewegt werden kann.

Gemäß einer Ausführung ist vorgesehen, dass die Motorspindel zur Übertragung einer Bewegungskraft für den Transport des Werkstückes vom Rüstplatz zum Werkstücktisch oder zurück mit der Palette oder dem Werkstück gekoppelt wird und die Bewegungskraft von der durch den Motorspindellinearantrieb bewirkten Bewegung der Motorspindel abgeleitet ist. Dies ermöglicht eine direkte Verwendung des Motorspindellinearantriebs für die Bewegung des Werkstücks.

Bevorzugt ist in die Werkzeugaufnahme der Motorspindel ein Kopplungsstück einsetzbar. Weiter bevorzugt wirkt das Kopplungsstück zur Übertragung der Bewegungskraft auf das Werkstück bzw. die Palette mit einem am Werkstück oder der Palette vorgesehenen Kupplungsgegenstück zusammen.

Durch die Verwendung eines solchen Kopplungsstücks kann die Kraftübertragung verbessert werden. Kopplungsstück und Kupplungsgegenstück können so ausgeführt sein, dass die Kraftübertragung, insbesondere in den relevanten Richtungen, optimiert wird. Beispielsweise kann das Kupplungsgegenstück ganz oder teilweise komplementär zum Kopplungsstück ausgeführt sein. Damit oder auch anders kann beispielsweise ein formschlüssiger Eingriff des Kopplungsstücks in das Kupplungsgegenstück erreicht werden.

Geschickter Weise ist vorgesehen, dass das Kupplungsgegenstück mit mindestens einer, mit mindestens einem Element des Kopplungsstückes formschlüssig zusammenwirkenden Hinterschneidung ausgestattet ist, um somit sowohl eine Bewegungskraft in Zug- wie auch Schubrichtung zu übertragen. Dies erlaubt eine besonders effiziente Kraftübertragung.

Gemäß einer Ausführung ist vorgesehen, dass das Kopplungsstück mindestens einen radial bezüglich der Motorspindelachse nach außen oder innen vorstehenden Abschnitt aufweist und die Motorspindel das in oder über das Kupplungsgegenstück einstehende oder übergreifende Kopplungsstück derart verdreht, dass der vorstehende Abschnitt mit dem die Hinterschneidung begrenzenden Rand zusammenwirkt. Damit kann die üblicherweise ohnehin vorgesehene Verdrehbarkeit der Motorspindel ausgenutzt werden, um Kopplungsstück und Kupplungsgegenstück miteinander in Eingriff zu bringen und eine formschlüssige Verbindung herzustellen. Ein Verschieben des Werkstücks oder der Palette während des Vorgangs, in welchem Kopplungsstück und Kupplungsgegenstück miteinander in Verbindung gebracht werden, kann vorteilhafterweise vermieden werden.

Das Kopplungsstück kann insbesondere an einem Abschnitt, insbesondere an einem dem Schaft abgewandten Endabschnitt, einen für die Übertragung eines Drehmomentes dienenden Mehrkant aufweisen. Geschickter Weise weist der Endabschnitt eine Federlagerung auf. Damit kann ein Drehmoment übertragen werden, welches zum Antrieb von Elementen des Werkstücks oder der Palette verwendet werden kann. Insbesondere können damit Spannvorrichtungen angetrieben werden, welche beispielsweise das Werkstück halten und/oder fixieren können.

Gemäß einer Ausführung ist vorgesehen, dass die Motorspindel entlang einer zur ersten Linearachse (Z) winkligen, bevorzugt rechtwinkligen zweiten Linearachse (Y) durch einen zweiten Motorspindellinearantrieb beweglich positionierbar ist. Die Motorspindel kann auch um eine erste Drehachse durch einen Drehantrieb drehbar positionierbar sein und insbesondere kann die Drehachse rechtwinklig zur ersten (Z) und/oder zweiten Linearachse (Y) sein. Dies entspricht einer praktikablen Ausführung eines Motorspindellinearantriebs.

Geschickter Weise ist der Werkstücktisch winkelig, bevorzugt rechtwinklig zur Drehachse durch einen Werkstücktischantrieb beweglich und positionierbar. Dies ermöglicht beispielsweise das Positionieren des Werkstücks während der Bearbeitung.

Die Bewegungskraft resultiert vorzugsweise aus einer Überlagerung der Linearbewegung der Motorspindel entlang der ersten (Z) und/oder zweiten Linearachse (Y) und/oder der Drehbewegung der Motorspindel um die Drehachse. Dies ermöglicht die vorteilhafte Nutzung der typischerweise durch einen Motorspindellinearantrieb zur Verfügung gestellten Bewegungsmöglichkeiten.

Während des Einprägens der Bewegungskraft kann die Motorspindelachse mit der ersten Linearachse (Z) einen spitzen Winkel einschließen. Die Motorspindelachse kann auch parallel zur Richtung der Bewegungskraft orientiert sein. Durch entsprechende Orientierungen können gewünschte Kräfteverteilungen erreicht werden und es kann die Bewegung der Motorspindel, welche zum Übergang zwischen Bearbeitungs- und Bewegungsfunktion erforderlich ist, verringert werden.

Die Erfindung betrifft des Weiteren eine spanabhebende Bearbeitungsmaschine mit mindestens einer je ein Werkzeug rotativ antreibenden Motorspindel und einem Werkstücktisch. Auf dem Werkstücktisch ist das Werkstück während der Bearbeitung aufgespannt. Für den Transport des Werkstückes von einem Rüstplatz zum Werkstücktisch und zurück ist auf der Werkstücktischoberfläche eine Rollenbahn vorgesehen, auf der das Werkstück bzw. die Palette für den Transport aufliegt. Die Motorspindel ist zumindest entlang einer ersten Linearachse (Z) durch einen ersten Motorspindellinearantrieb beweglich positionierbar.

Erfindungsgemäß ist vorgesehen, dass der Motorspindellinearantrieb auch für die Bewegung des Werkstückes vom Rüstplatz zum Werkstücktisch und zurück dient.

Damit können ähnliche Vorteile erreicht werden wie weiter oben mit Bezug auf die zuerst beschriebene spanabhebende Bearbeitungsmaschine beschrieben. Es sei des Weiteren verstanden, dass alle weiter oben oder auch sonstwo in dieser Beschreibung erwähnten Ausführungen und Varianten entsprechend angewendet werden können.

Die Erfindung betrifft des Weiteren ein Verfahren für das Einwechseln eines Werkstückes von einem Rüstplatz auf den Werkstücktisch innerhalb einer spanabhebenden Bearbeitungsmaschine. Dabei kann es sich insbesondere um eine erfindungsgemäße Bearbeitungsmaschine handeln, wobei auf alle in dieser Anmeldung beschriebenen Ausführungen und Varianten zurückgegriffen werden kann.

In die Werkzeugaufnahme der Motorspindel der Bearbeitungsmaschine wird zumindest ein Kopplungsstück eingewechselt. Hernach wird die Motorspindel mit dem Kopplungsstück durch den Motorspindellinearantrieb derart an dem Werkstück oder der das Werkstück tragenden Palette positioniert, dass eine Bewegungskraft zum Einfördern des Werkstückes vom Rüstplatz auf den Werkstücktisch übertragen werden kann. Nachdem das Werkstück auf dem Werkstücktisch positioniert ist, wird aus der Werkzeugaufnahme das Kopplungsstück ausgespannt und ein spanabhebendes Werkzeug wird eingewechselt.

Mittels des erfindungsgemäßen Verfahrens können die weiter oben mit Bezug auf eine erfindungsgemäße spanabhebende Bearbeitungsmaschine erwähnten Vorteile erreicht werden.

Insbesondere kann auf eine manuelle Verschiebung des Werkstücks und auf das Vorsehen eines separaten Antriebs zum Verschieben des Werkstücks verzichtet werden.

Nachdem die Motorspindel das Werkstück auf dem Werkstücktisch positioniert hat, kann die Motorspindel von der Palette bzw. dem Werkstück entkoppelt werden. Dann kann die Motorspindel derart an dem Werkstücktisch positioniert werden, dass das von der Motorspindel gehaltene Kopplungsstück in einen Energieanschluss des Werkstücktischs einkoppelt und hernach Energie für die Durchführung von Funktionen des Werkstücktischs, wie zum Beispiel ein Absenken des Werkstückes bzw. der Palette auf den Werkstücktisch oder ein Festspannen des Werkstückes auf dem Werkstücktisch, in den Werkstücktisch einspeist.

Dies erlaubt den Antrieb von Elementen auf der Palette, dem Werkstücktisch oder dem Werkstück wie beispielsweise von Spanneinrichtungen, welche zum Halten und Fixieren des Werkstücks oder der Palette dienen können. Auch hierfür ist kein zusätzlicher Antrieb nötig, da die notwendige Energie bzw. Bewegung von der Motorspindel zur Verfügung gestellt werden kann, welche ohnehin für Bearbeitungszwecke vorhanden ist.

Die Erfindung betrifft des Weiteren ein System. Dieses weist eine spanabhebende Bearbeitungsmaschine gemäß der Erfindung auf, wobei auf alle beschriebenen Ausführungen und Varianten zurückgegriffen werden kann. Das System weist ferner eine ein Werkstück unmittelbar oder mittelbar tragenden Palette auf. Der Motorspindellinearantrieb dient auch für die Bewegung des Werkstückes vom Rüstplatz zum Werkstücktisch und zurück.

Bei dem erfindungsgemäßen System kommen die weiter oben beschriebenen Vorteile einer erfindungsgemäßen Bearbeitungsmaschine zur Geltung.

Es sei verstanden, dass die weiter oben beschriebenen Ausgestaltungen von Bestandteilen oder Ausgestaltungen von Komponenten wie beispielsweise einer Palette, eines Kopplungsstücks oder eines Kupplungsgegenstücks insbesondere im Kontext eines erfindungsgemäßen Systems relevant sind, da derartige Komponenten insbesondere Bestandteile eines Systems sein können.

In diesem Zusammenhang wird insbesondere darauf hingewiesen, dass alle im Bezug auf eine Vorrichtung, also insbesondere die Bearbeitungsmaschine und das System, beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche berücksichtigt und beansprucht werden und zählen ebenfalls zur Offenbarung.

Des Weiteren umfasst die Erfindung auch die Verwendung einer Motorspindel für den Zweck des Bewegens eines Werkstücks zwischen Rüstplatz und Bearbeitungstisch.

In der Zeichnung ist die Erfindung insbesondere in einem Ausführungsbeispiel schematisch dargestellt. Es zeigen:
- Fig. 1: eine Bearbeitungsmaschine gemäß der Erfindung in einer ersten Ansicht,
- Fig. 2: die Bearbeitungsmaschine gemäß der Erfindung in einer zweiten Ansicht,
- Fig. 3: die Bearbeitungsmaschine gemäß der Erfindung in einer dritten Ansicht,
- Fig. 4a: eine Detailansicht der erfindungsgemäßen Bearbeitungsmaschine,
- Fig. 4b: eine Detailansicht der erfindungsgemäßen Bearbeitungsmaschine.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

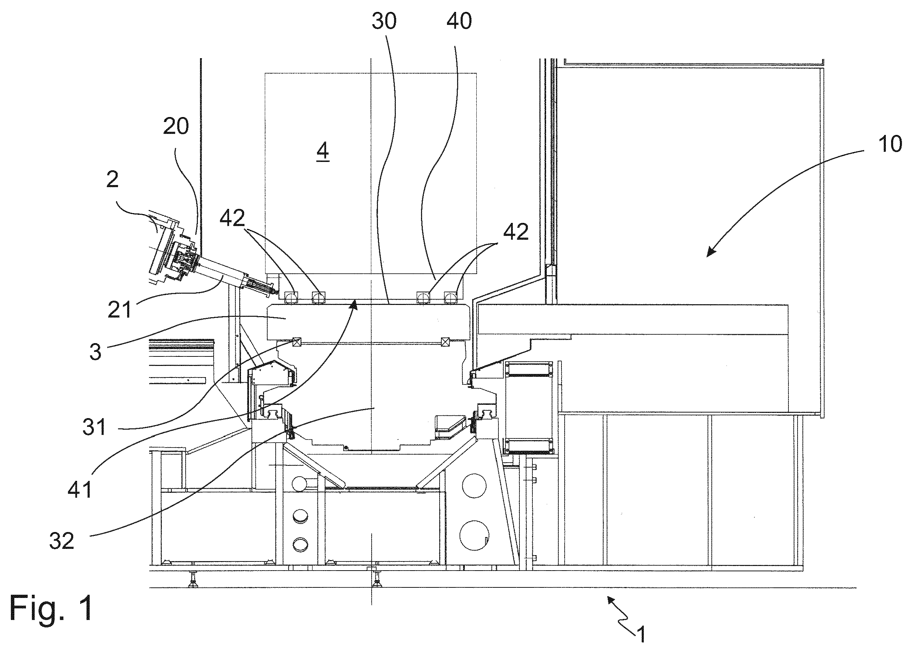

Figur 1 zeigt eine erfindungsgemäße spanabhebende Bearbeitungsmaschine 1 gemäß einem Ausführungsbeispiel.

Die Bearbeitungsmaschine 1 weist einen Rüstplatz 10 auf. Dieser ist dazu ausgebildet, ein Werkstück 4, welches mittels der Bearbeitungsmaschine 1 bearbeitet werden soll, in die Bearbeitungsmaschine 1 einzubringen oder aus dieser zu entfernen.

Die Bearbeitungsmaschine 1 weist ferner eine Motorspindel 2 auf. Diese weist eine Werkzeugaufnahme 20 zum Aufnehmen eines Werkzeugs wie beispielsweise eines Bohrers auf. Vorliegend, also im in Figur 1 gezeigten Zustand, ist jedoch in der Werkzeugaufnahme 20 kein übliches Werkzeug, sondern ein Kopplungsstück 21 aufgenommen. Dieses wird wie weiter unten beschrieben verwendet.

Die Bearbeitungsmaschine 1 weist einen Werkstücktisch 3 auf. Auf diesem ist eine Werkstücktischoberfläche 30 ausgebildet. Der Werkstücktisch 3 dient grundsätzlich dazu, das Werkstück 4, beispielsweise einen Motorblock, zur Bearbeitung zu tragen. Dies kann direkt, also durch unmittelbares Tragen des Werkstücks 4 auf der Werkstücktischoberfläche 30, oder auch indirekt, also unter Zwischenschaltung einer Palette 40, erfolgen. Letzterer Fall ist in Figur 1 dargestellt.

Der Werkstücktisch 3 ist mittels eines Lagers 31 drehbar gelagert. Er ist dadurch um eine Werkstücktischdrehachse 32 drehbar. Durch einen nicht gezeigten Rotationsantrieb kann der Werkstücktisch 3 aktiv um die Werkstücktischdrehachse 32 gedreht werden. Dies ermöglicht die Positionierung eines Werkzeugs an unterschiedlichen Stellen, insbesondere hinsichtlich der Winkellage, ohne dass eine besonders weitreichende Beweglichkeit der Motorspindel vorgesehen werden muss, welche apparativ aufwändig ist.

Das Werkstück 4 ist auf der bereits weiter oben erwähnten Palette 40 gelagert. Diese dient als Unterlage für das Werkstück 4 während der Bearbeitung und auch während des Be- und Entladens.

Die Palette 40 weist an ihrer Unterseite 41 eine Anzahl von vorliegend insgesamt vier Laufrollen 42 auf. Mittels dieser Laufrollen 42 kann die Palette 40 horizontal verfahren werden. Damit ist es möglich, die Palette 40 zwischen dem Werkstücktisch 3 und dem Rüstplatz 10 zu verfahren bzw. zu verschieben.

Die Motorspindel 2 weist einen nicht gezeigten Motorspindellinearantrieb auf, mittels welchem sie in allen drei Raumrichtungen begrenzt beweglich ist. Dieser Motorspindellinearantrieb dient üblicherweise dazu, die Motorspindel 2 und damit ein in ihr aufgenommenes Werkzeug während der Bearbeitung des Werkstücks 4 so zu verfahren, dass die gewünschte Bearbeitung des Werkstücks 4 erreicht wird.

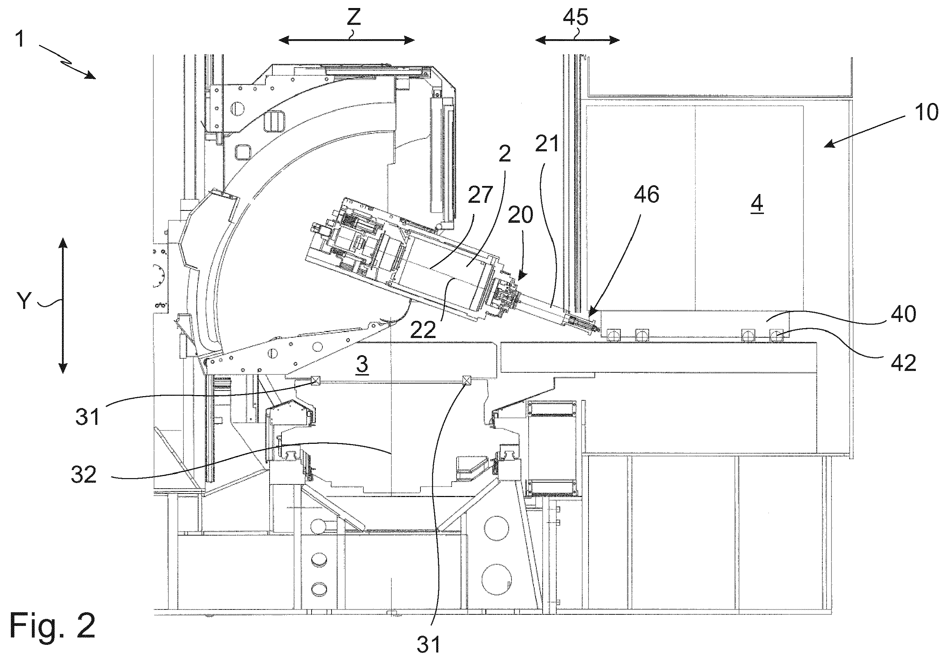

Das Kopplungsstück 21 ist in dem in Figur 1 dargestellten Zustand mit der Palette 40 verbunden. Wie dies genau erfolgt ist weiter unten mit Bezug auf Figur 2 näher beschrieben.

Durch die Verbindung des Kopplungsstücks 21 mit der Palette 40 kann der Motorspindellinearantrieb nicht nur die Motorspindel 2 mit ihrem Kopplungsstück, sondern auch die Palette 40 bewegen. Insbesondere kann er für eine Bewegung in horizontaler Richtung wie weiter oben mit Bezug auf die Laufrollen 42 beschrieben, sorgen. Dies entspricht der Bewegung, welche bei der gezeigten Bearbeitungsmaschine 1 zum Einbringen und Entfernen des Werkstücks 4 erforderlich ist.

Der Motorspindellinearantrieb kann auf diese Weise zur Bewegung der Palette 40 zwischen Werkstücktisch 3 und Rüstplatz 10 verwendet werden. Es ist weder ein manueller Eingriff noch ein separat vorzusehender Antrieb erforderlich.

Figur 2 zeigt die Bearbeitungsmaschine 1 von Figur 1 in einer anderen Ansicht.

Dabei sind zwei der Bewegungsrichtungen des Motorspindellinearantriebs, nämlich Y und Z, dargestellt. Die Y-Richtung entspricht dabei der vertikalen Richtung. Die Z-Richtung entspricht der horizontalen Richtung zwischen Werkstücktisch 3 und Rüstplatz 10. Es sei verstanden, dass die Motorspindel 2 ferner auch noch um eine X-Richtung beweglich ist, welche auf den gezeigten Y- und Z-Richtungen sowie auf der Papierebene von Figur 2 senkrecht steht und horizontal liegt. Die Motorspindel 2 ist ferner um eine erste Drehachse 27 verdrehbar.

Die Motorspindel 2 weist eine Motorspindeldrehachse 22 auf, um welche die Motorspindel 2 ein Werkzeug oder auch das dargestellte Kopplungsstück 21 drehen kann. Im Fall eines Werkzeugs können damit typische Bearbeitungsvorgänge wie beispielsweise das Bohren eines Lochs erreicht werden.

Wie ferner in Figur 2 dargestellt ist weist die Palette 40 ein Kupplungsgegenstück 46 auf. In dieses wird das Kopplungsstück 21 formschlüssig aufgenommen. Damit wird eine formschlüssige Verbindung letztlich zwischen der Motorspindel 2 und der Palette 40 hergestellt. Wird die Motorspindel 2 mittels ihres Motorspindellinearantriebs in der dargestellten Z-Richtung verfahren, so bewegt sich gleichzeitig auch die Palette 40 mit.

Die Richtung 45 dieser Bewegung der Palette 40 ist mit einem Doppelpfeil dargestellt. Die Richtung 45 entspricht der Z-Richtung des Motorspindellinearantriebs. Es sei erwähnt, dass eine solche durch den Motorspindellinearantrieb induzierte Bewegung der Palette 40 unabhängig davon möglich ist, ob die Motorspindeldrehachse 22 horizontal ausgerichtet ist oder, wie in Figur 2 dargestellt, gekippt ist.

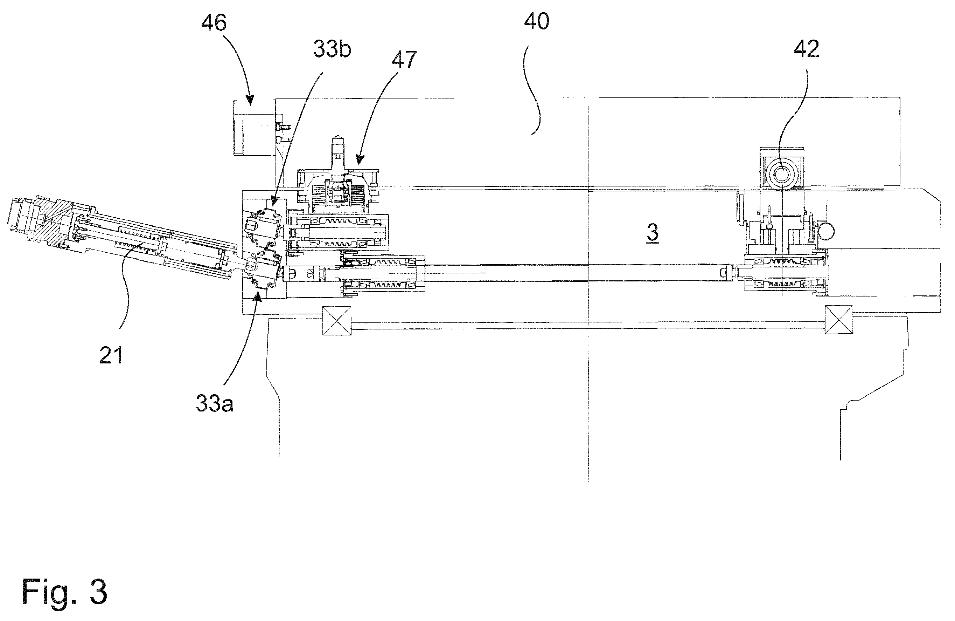

Figur 3 zeigt den Werkstücktisch 3 sowie das Kopplungsstück 21 in größerer Detailliertheit, wobei ferner das Kopplungsstück 21 in einer anderen Position dargestellt ist.

Wie gezeigt weist der Werkstücktisch 3 einen ersten Energieanschluss 33a und einen zweiten Energieanschluss 33b auf.

Diese Energieanschlüsse 33a, 33b sind dafür ausgebildet, dass das Kopplungsstück 21 jeweils in sie eingreifen kann und sie auch drehen kann. Damit kann Energie von dem Kopplungsstück 21, letztlich also von der Motorspindel 2, auf den Werkstücktisch 3 übertragen werden.

Diese Energie kann insbesondere verwendet werden, um sie an die Palette 40 weiter zu übertragen. Hierzu kann die Palette 40 Energieaufnahmemittel 47 aufweisen. Insbesondere kann somit eine Drehung der Motorspindel 2 in eine Bewegung auf der Palette 40 umgesetzt werden. Damit können beispielsweise nicht näher dargestellte Spannmittel auf der Palette zum Halten und/oder Spannen des Werkstücks 4 betrieben werden.

Die Motorspindel 2 kann somit nicht nur zum Verschieben der Palette 40, sondern auch zum Antrieb von Spannmitteln verwendet werden. Dies kann zusätzlich manuellen Aufwand oder spezielle Antriebsaggregate einsparen.

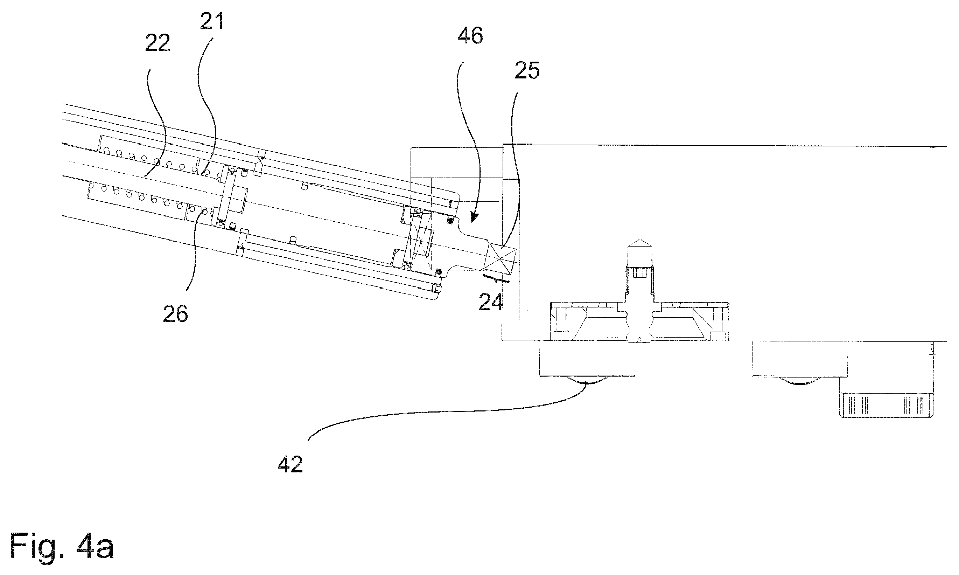

In Figur 4a ist das Kopplungsstück 21 im Kupplungsgegenstück 46 in größerer Detailliertheit dargestellt. Dabei ist zu erkennen, dass am rechten Endabschnitt 24 des Kopplungsstücks 21 ein Mehrkant 25, vorliegend ein Vierkant, ausgebildet ist. Um diesen nach rechts zu drücken ist in dem Kopplungsstück 21 ferner eine Federlagerung 26 vorhanden.

Der Mehrkant 25 kann insbesondere dazu verwendet werden, ein Drehmoment auf den Werkstücktisch 3 zu übertragen. Beispielsweise kann dies erfolgen, wenn das Kopplungsstück 21 in einem der Energieanschlüsse 33a, 33b aufgenommen ist.

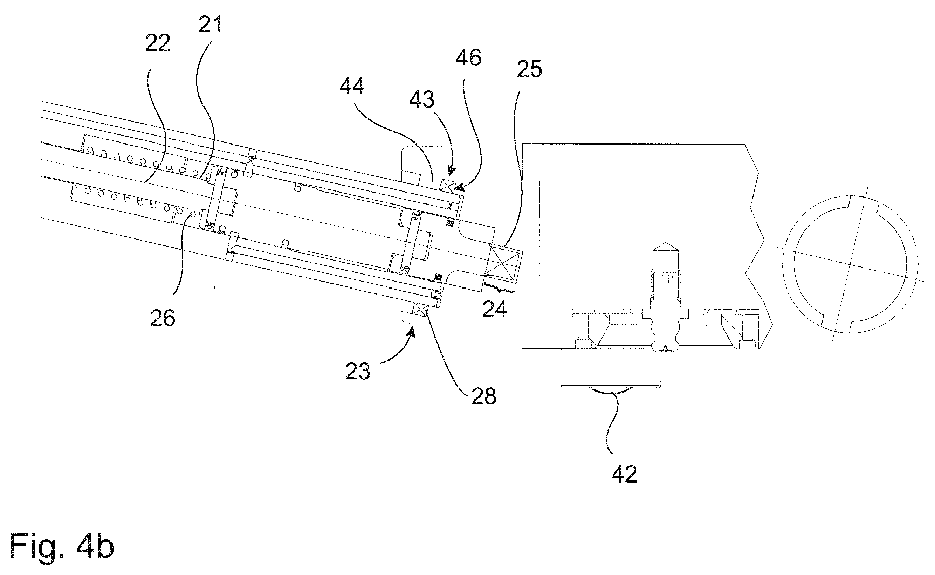

Figur 4b zeigt eine Ausführung, welche im Vergleich zu der in Figur 4a dargestellten Ausführung insofern abgewandelt ist, als das Kupplungsgegenstück 46 eine Hinterschneidung 43 aufweist, welche von einem Rand 44 begrenzt wird. In der Hinterschneidung 43 kann ein Vorsprung 28 des Kopplungsstücks 21 aufgenommen werden, welcher in einem vorstehenden Abschnitt 23 des Kopplungsstücks 21 ausgebildet ist. Dieser Vorsprung 28 sorgt in dem dargestellten Zustand für eine formschlüssige Verbindung zwischen Kopplungsstück 21 und Kupplungsgegenstück 46, welche eine zumindest nahezu oder auch vollständig spielfreie Kraftübertragung zwischen dem Kopplungsstück 21 und der Palette 40 erlaubt.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Eine spanabhebende Bearbeitungsmaschine mit mindestens einer je ein Werkzeug rotativ antreibenden Motorspindel und einem Werkstücktisch, an oder auf welchem das mindestens eine Werkstück unmittelbar oder mittelbar über eine das Werkstück tragende Palette während der spanabhebenden Bearbeitung aufgespannt ist, wobei für den Transport des Werkstückes bzw. der das Werkstück tragenden Palette von einem Rüstplatz zum Werkstücktisch und zurück, auf der Werkstücktischoberfläche eine Gleit- oder Rollenbahn vorgesehen ist, auf der das Werkstück bzw. die Palette für den Transport aufliegt oder die Palette auf ihrer Unterseite mit Gleitschienen oder Laufrollen ausgestattet ist und die Motorspindel zumindest entlang einer ersten Linearachse durch einen ersten Motorspindellinearantrieb beweglich positionierbar ist und der Motorspindellinearantrieb auch für die Bewegung des Werkstückes vom Rüstplatz zum Werkstücktisch und zurück dient.

Eine wie zuvor ausgeführte spanabhebende Bearbeitungsmaschine, wobei die Motorspindel zur Übertragung einer Bewegungskraft für den Transport des Werkstückes vom Rüstplatz zum Werkstücktisch oder zurück mit der Palette oder dem Werkstück gekoppelt wird und die Bewegungskraft von der durch den Motorspindellinearantrieb bewirkten Bewegung der Motorspindel abgeleitet ist.

Eine wie zuvor ausgeführte spanabhebende Bearbeitungsmaschine, wobei in die Werkzeugaufnahme der Motorspindel ein Kopplungsstück einsetzbar ist und das Kopplungsstück zur Übertragung der Bewegungskraft auf das Werkstück bzw. die Palette mit einem am Werkstück oder der Palette vorgesehenen Kupplungsgegenstück zusammenwirkt.

Eine wie zuvor ausgeführte spanabhebende Bearbeitungsmaschine, wobei das Kupplungsgegenstück mit mindestens einer, mit mindestens einem Element des Kopplungsstückes formschlüssig zusammenwirkenden Hinterschneidung ausgestattet ist, um somit sowohl eine Bewegungskraft in Zug- wie auch Schubrichtung zu übertragen.

Eine wie zuvor ausgeführte spanabhebende Bearbeitungsmaschine, wobei das Kopplungsstück mindestens einen radial bezüglich der Motorspindelachse nach außen oder innen vorstehenden Abschnitt aufweist und die Motorspindel das in oder über das Kupplungsgegenstück einstehende oder übergreifende Kopplungsstück derart verdreht, dass der vorstehende Abschnitt mit dem die Hinterschneidung begrenzenden Rand zusammenwirkt.

Eine wie zuvor ausgeführte spanabhebende Bearbeitungsmaschine, wobei das Kopplungsstück an einem Abschnitt, insbesondere an einem dem Schaft abgewandten Endabschnitt einen für die Übertragung eines Drehmomentes dienenden Mehrkant aufweist.

Eine wie zuvor ausgeführte spanabhebende Bearbeitungsmaschine, wobei der Endabschnitt eine Federlagerung aufweist.

Eine wie zuvor ausgeführte spanabhebende Bearbeitungsmaschine, wobei die Motorspindel entlang einer zur ersten Linearachse winkligen, bevorzugt rechtwinkligen zweiten Linearachse durch einen zweiten Motorspindellinearantrieb beweglich positionierbar ist und/oder die Motorspindel um eine erste Drehachse durch einen Drehantrieb drehbar positionierbar ist und insbesondere die Drehachse rechtwinklig zur ersten und/oder zweiten Linearachse ist.

Eine wie zuvor ausgeführte spanabhebende Bearbeitungsmaschine, wobei der Werkstücktisch winkelig, bevorzugt rechtwinklig zur Drehachse durch einen Werkstücktischantrieb beweglich und positionierbar ist.

Eine wie zuvor ausgeführte spanabhebende Bearbeitungsmaschine, wobei die Bewegungskraft aus einer Überlagerung der Linearbewegung der Motorspindel entlang der ersten und/oder zweiten Linearachse und/oder der Drehbewegung der Motorspindel um die Drehachse resultiert.

Eine wie zuvor ausgeführte spanabhebende Bearbeitungsmaschine, wobei während dem Einprägen der Bewegungskraft die Motorspindelachse mit der ersten Linearachse einen spitzen Winkel einschließt oder die Motorspindelachse parallel zur Richtung der Bewegungskraft orientiert ist.

Die Erfindung umfasst des Weiteren eine spanabhebende Bearbeitungsmaschine mit mindestens einer je ein Werkzeug rotativ antreibenden Motorspindel und einem Werkstücktisch, auf welchem das Werkstück während der Bearbeitung aufgespannt ist, wobei für den Transport des Werkstückes von einem Rüstplatz zum Werkstücktisch und zurück, auf der Werkstücktischoberfläche eine Rollenbahn vorgesehen ist, auf der das Werkstück bzw. die Palette für den Transport aufliegt und die Motorspindel zumindest entlang einer ersten Linearachse durch einen ersten Motorspindellinearantrieb beweglich positionierbar ist und der Motorspindellinearantrieb auch für die Bewegung des Werkstückes vom Rüstplatz zum Werkstücktisch und zurück dient.

Die Erfindung umfasst auch ein Verfahren für das Einwechseln eines Werkstückes von einem Rüstplatz auf den Werkstücktisch innerhalb einer spanabhebenden Bearbeitungsmaschine, insbesondere nach einer oder mehrerer Varianten oder Ausführungen der Erfindung, wobei in die Werkzeugaufnahme der Motorspindel der Bearbeitungsmaschine zumindest ein Kopplungsstück eingewechselt wird und hernach die Motorspindel mit dem Kopplungsstück durch den Motorspindellinearantrieb derart an dem Werkstück oder der das Werkstück tragenden Palette positioniert wird, damit eine Bewegungskraft zum Einfördern des Werkstückes vom Rüstplatz auf den Werkstücktisch übertragen werden kann und, nachdem das Werkstück auf dem Werkstücktisch positioniert ist, in die Werkzeugaufnahme das Kopplungsstück aus- und ein spanabhebendes Werkzeug eingewechselt wird.

Bei dem Verfahren kann vorgesehen sein, dass nachdem die Motorspindel das Werkstück auf dem Werkstücktisch positioniert hat, die Motorspindel von der Palette bzw. dem Werkstück entkoppelt wird, und dann die Motorspindel derart an dem Werkstücktisch positioniert wird, dass das von der Motorspindel gehaltene Kopplungsstück in einen Energieanschluss des Werkstücktischs einkoppelt und hernach Energie für die Durchführung von Funktionen des Werkstücktischs, wie zum Beispiel ein Absenken des Werkstückes bzw. der Palette auf den Werkstücktisch oder ein Festspannen des Werkstückes auf dem Werkstücktisch, in den Werkstücktisch einspeist.

Die Erfindung umfasst des Weiteren ein System, zumindest bestehend aus einer spanabhebende Bearbeitungsmaschine nach einer oder mehrerer Varianten oder Ausführungen der Erfindung und einer das mindestens eine Werkstück unmittelbar oder mittelbar tragenden Palette, wobei der Motorspindellinearantrieb auch für die Bewegung des Werkstückes vom Rüstplatz zum Werkstücktisch und zurück dient.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Spanabhebende Bearbeitungsmaschine mit mindestens einer je ein Werkzeug rotativ antreibenden Motorspindel (2) und einem Werkstücktisch (3), an oder auf welchem das mindestens eine Werkstück (4) unmittelbar oder mittelbar über eine das Werkstück (4) tragende Palette (40) während der spanabhebenden Bearbeitung aufgespannt ist, wobei für den Transport des Werkstückes (4) bzw. der das Werkstück (4) tragenden Palette (40) von einem Rüstplatz (10) zum Werkstücktisch (3) und zurück, auf der Werkstücktischoberfläche (30) eine Gleit- oder Rollenbahn vorgesehen ist, auf der das Werkstück (4) bzw. die Palette (40) für den Transport aufliegt oder die Palette (40) auf ihrer Unterseite (41) mit Gleitschienen oder Laufrollen (42) ausgestattet ist und die Motorspindel (2) zumindest entlang einer ersten Linearachse (Z) durch einen ersten Motorspindellinearantrieb beweglich positionierbar ist und der Motorspindellinearantrieb auch für die Bewegung des Werkstückes (4) vom Rüstplatz (10) zum Werkstücktisch (3) und zurück dient.

2. Bearbeitungsmaschine nach Anspruch 1, **dadurch gekennzeichnet, dass** die Motorspindel (2) zur Übertragung einer Bewegungskraft für den Transport des Werkstückes (4) vom Rüstplatz (10) zum Werkstücktisch (3) oder zurück mit der Palette (40) oder dem Werkstück (4) gekoppelt wird und die Bewegungskraft von der durch den Motorspindellinearantrieb bewirkten Bewegung der Motorspindel (2) abgeleitet ist.

3. Bearbeitungsmaschine nach einem der vorhergehenden Ansprüche, **dadurch gekennzeichnet, dass** in die Werkzeugaufnahme (20) der Motorspindel (2) ein Kopplungsstück (21) einsetzbar ist und das Kopplungsstück (21) zur Übertragung der Bewegungskraft auf das Werkstück (4) bzw. die Palette (40) mit einem am Werkstück (4) oder der Palette (40) vorgesehenen Kupplungsgegenstück (46) zusammenwirkt, wobei bevorzugt das Kupplungsgegenstück (46) mit mindestens einer, mit mindestens einem Element des Kopplungsstückes (21) formschlüssig zusammenwirkenden Hinterschneidung (43) ausgestattet ist, um somit sowohl eine Bewegungskraft in Zug- wie auch Schubrichtung zu übertragen.

4. Bearbeitungsmaschine nach einem der vorhergehenden Ansprüche, **dadurch gekennzeichnet, dass** das Kopplungsstück (21) mindestens einen radial bezüglich der Motorspindelachse (22) nach außen oder innen vorstehenden Abschnitt (23) aufweist und die Motorspindel (2) das in oder über das Kupplungsgegenstück (46) einstehende oder übergreifende Kopplungsstück (21) derart verdreht, dass der vorstehende Abschnitt (23) mit dem die Hinterschneidung (43) begrenzenden Rand (44) zusammenwirkt.

5. Bearbeitungsmaschine nach einem der vorhergehenden Ansprüche, **dadurch gekennzeichnet, dass** das Kopplungsstück (21) an einem Abschnitt, insbesondere an einem dem Schaft abgewandten Endabschnitt (24) einen für die Übertragung eines Drehmomentes dienenden Mehrkant (25) aufweist, wobei der Endabschnitt (24) bevorzugt eine Federlagerung (26) aufweist.

6. Bearbeitungsmaschine nach einem der vorhergehenden Ansprüche, **dadurch gekennzeichnet, dass** die Motorspindel (2) entlang einer zur ersten Linearachse (Z) winkligen, bevorzugt rechtwinkligen zweiten Linearachse (Y) durch einen zweiten Motorspindellinearantrieb beweglich positionierbar ist

7. Bearbeitungsmaschine nach einem der vorhergehenden Ansprüche, **dadurch gekennzeichnet, dass** die Motorspindel (2) um eine erste Drehachse (27) durch einen Drehantrieb drehbar positionierbar ist und insbesondere die Drehachse (27) rechtwinklig zur ersten (Z) und/oder zweiten Linearachse (Y) ist.

8. Bearbeitungsmaschine nach einem der vorhergehenden Ansprüche, **dadurch gekennzeichnet, dass** der Werkstücktisch (3) winkelig, bevorzugt rechtwinklig zur Drehachse (27) durch einen Werkstücktischantrieb beweglich und positionierbar ist.

9. Bearbeitungsmaschine nach einem der vorhergehenden Ansprüche, **dadurch gekennzeichnet, dass** die Bewegungskraft aus einer Überlagerung der Linearbewegung der Motorspindel (2) entlang der ersten (Z) und/oder zweiten Linearachse (Y) und/oder der Drehbewegung der Motorspindel (2) um die Drehachse (27) resultiert.

10. Bearbeitungsmaschine nach einem der vorhergehenden Ansprüche, **dadurch gekennzeichnet, dass** während dem Einprägen der Bewegungskraft die Motorspindelachse (22) mit der ersten Linearachse (Z) einen spitzen Winkel einschließt oder die Motorspindelachse (22) parallel zur Richtung (45) der Bewegungskraft orientiert ist.

11. Spanabhebende Bearbeitungsmaschine mit mindestens einer je ein Werkzeug rotativ antreibenden Motorspindel (2) und einem Werkstücktisch (3), auf welchem das Werkstück (4) während der Bearbeitung aufgespannt ist, wobei für den Transport des Werkstückes (4) von einem Rüstplatz (10) zum Werkstücktisch (3) und zurück, auf der Werkstücktischoberfläche (30) eine Rollenbahn vorgesehen ist, auf der das Werkstück (4) bzw. die Palette (40) für den Transport aufliegt und die Motorspindel (2) zumindest entlang einer ersten Linearachse (Z) durch einen ersten Motorspindellinearantrieb beweglich positionierbar ist und der Motorspindellinearantrieb auch für die Bewegung des Werkstückes (4) vom Rüstplatz (10) zum Werkstücktisch (3) und zurück dient.

12. Verfahren für das Einwechseln eines Werkstückes (4) von einem Rüstplatz (10) auf den Werkstücktisch (3) innerhalb einer spanabhebenden Bearbeitungsmaschine (1), insbesondere nach einem oder mehreren der vorhergehenden Ansprüche, wobei in die Werkzeugaufnahme (20) der Motorspindel (2) der Bearbeitungsmaschine (1) zumindest ein Kopplungsstück (21) eingewechselt wird und hernach die Motorspindel (2) mit dem Kopplungsstück (21) durch den Motorspindellinearantrieb derart an dem Werkstück (4) oder der das Werkstück (4) tragenden Palette (40) positioniert wird, damit eine Bewegungskraft zum Einfördern des Werkstückes (4) vom Rüstplatz (10) auf den Werkstücktisch (3) übertragen werden kann und, nachdem das Werkstück (4) auf dem Werkstücktisch (3) positioniert ist, in die Werkzeugaufnahme (20) das Kopplungsstück (21) aus- und ein spanabhebendes Werkzeug eingewechselt wird.

13. Verfahren nach Anspruch 12, **dadurch gekennzeichnet, dass** nachdem die Motorspindel (2) das Werkstück (4) auf dem Werkstücktisch (3) positioniert hat, die Motorspindel (2) von der Palette (40) bzw. dem Werkstück (4) entkoppelt wird, und dann die Motorspindel (2) derart an dem Werkstücktisch (3) positioniert wird, dass das von der Motorspindel (2) gehaltene Kopplungsstück (21) in einen Energieanschluss (33a, 33b) des Werkstücktischs (3) einkoppelt und hernach Energie für die Durchführung von Funktionen des Werkstücktischs (3), wie zum Beispiel ein Absenken des Werkstückes (4) bzw. der Palette auf den Werkstücktisch (3) oder ein Festspannen des Werkstückes (4) auf dem Werkstücktisch (3), in den Werkstücktisch (3) einspeist.

14. System, zumindest bestehend aus einer spanabhebende Bearbeitungsmaschine nach einem der vorhergehenden Ansprüche 1 bis 11 und einer das mindestens eine Werkstück (4) unmittelbar oder mittelbar tragenden Palette (40) wobei der Motorspindellinearantrieb auch für die Bewegung des Werkstückes (4) vom Rüstplatz (10) zum Werkstücktisch (3) und zurück dient.
